# EUROPÄISCHE PATENTANMELDUNG

(11) **EP 1 772 658 A2**
(43) Veröffentlichungstag der Anmeldung: **11.04.2007**
(21) Anmeldenummer: 06120930.0
(22) Anmeldetag: 20.09.2006
(51) Int. Cl.: F16L 11/127, F01N 3/20, F16L 53/00, F16L 55/027

(54) **Schlauchleitung**

(30) Priorität: 05.10.2005 DE 102005047806
(71) Anmelder: ContiTech Schlauch GmbH, 30165 Hannover (DE)
(72) Erfinder: Besche, Anton, 34497, Korbach (DE); Schmelter, Klaus, 59929, Brilon (DE)
(74) Vertreter: Finger, Karsten

(57) **Zusammenfassung**

Die Erfindung betrifft eine Schlauchleitung (1) aus elastomerem Material, die ein Verdrängungselement (3) aufweist, das im Inneren der Schlauchleitung (1) angeordnet ist und dessen Außendurchmesser mindestens teilweise kleiner ist als der Innendurchmesser der Schlauchleitung (1). Damit lässt sich einerseits das unproduktive Passivvolumen in der Leitung reduzieren, andererseits wird der Kontakt des Fluids mit der beheizbaren Außenwand der Leitung verbessert, so dass sich das Fluid besser aufheizen lässt. Derartige Schläuche sind besonders für SCR-Systeme geeignet.

## Beschreibung

Die Erfindung betrifft eine Schlauchleitung aus elastomerem Material.

Flexible Schläuche dieser Art werden in Kraftfahrzeugen zur Förderung von Flüssigkeiten wie Kraftstoff, Bremsflüssigkeit, Kühlwasser oder Klimaflüssigkeit eingesetzt. Sie haben gegenüber starren Rohren den Vorteil, Bewegungen der miteinander verbundenen Fahrzeugteile mitzumachen, ohne durch Vibrationen vorzeitig zerstört zu werden. Ihre Dehnbarkeit kann Druckschwankungen in den Systemen ausgleichen. Sie lassen sich ohne Vorformung einfach montieren und auch an komplizierten Konturen anbringen. Es finden dabei zunehmend auch Schlauchleitungen mit einer Beheizung Verwendung. Das in der Schlauchleitung zu erhitzende Fluid lässt sich dabei von Außen über die Leitungswandung oder von Innen durch zusätzlich in die Schlauchleitung eingebrachte Heizelemente erwärmen.

In der DE 102 01 920 A1 ist eine derartige Leitung als flexibler beheizbarer Schlauch gezeigt, der aus drei Schichten besteht, wobei die innere Schicht das Fluid führt, darüber sich die Verstärkungsschicht befindet und darauf, unter- oder innerhalb der elastomeren Außenschicht, der oder die elektrischen Heizleiter angeordnet sind.

Schlauchleitungen dieser Gattung werden auch in Systemen zur selektiven katalytischen Reduktion (SCR) von Kraftfahrzeugabgasen eingesetzt. Problematisch in diesem Zusammenhang ist, dass das in diesen Systemen verwendete Fluid, beispielsweise ein Harnstoff-Wasser-Gemisch, beim Einfrieren eine hohe Volumenzunahme von bis zu 8,5 % aufweist. Das hat zur Folge, dass in Schlauchleitungen mit großem spezifischen Volumen, d.h. das Volumen pro Längeneinheit, und geringer Elastizität sehr hohe Drücke von 30 bar und mehr entstehen, was zur Zerstörung der weiteren Systemkomponenten führen kann. Außerdem sind aufgrund des geringen Verbrauches an SCR-Fluiden die Durchflussmengen in diesen Systemen sehr gering, so dass ein großes unproduktives Passivvolumen in den Leitungen unerwünscht ist. Der kleinste fertigungstechnisch herstellbare Innendurchmesser liegt bei verstärkten Elastomerschläuchen bei etwa 3 mm, was für SCR-Systeme als häufig nicht ausreichend angesehen wird.

Der Erfindung liegt die Aufgabe zugrunde, eine Schlauchleitung der eingangs geschilderten Art zu schaffen, die unter Vermeidung der genannten Nachteile insbesondere für SCR-Systeme optimiert ist.

Diese Aufgabe wird dadurch gelöst, dass die Schlauchleitung ein sich mindestens teilweise über die Länge der Schlauchleitung erstreckendes, den inneren Querschnitt verringerndes Verdrängungselement aufweist, das im Inneren der Schlauchleitung angeordnet ist und dessen Außendurchmesser mindestens teilweise kleiner ist als der Innendurchmesser der Schlauchleitung.

Das Verdrängungselement nimmt den Raum im Inneren der Schlauchleitung ein, der üblicherweise von der Kernströmung des Fluids durchströmt wird. Dadurch ist das spezifische Volumen der Schlauchleitung reduziert. Auf diese Weise lässt sich auch das spezifische Volumen der Schlauchleitung bei bereits technisch minimalem Innendurchmesser der Leitung noch weiter reduzieren. Dies ist besonders in SCR-Systemen vorteilhaft, weil dadurch das unproduktive Passivvolumen in der Leitung minimiert ist und die Druckzunahme im gesamten System beim Einfreiren weniger starke Auswirkungen auf die weiteren Systemkomponenten hat.

In einer weiteren Ausführungsform der Erfindung ist die Schlauchleitung als beheizbare Leitung ausgebildet.

Dies hat den Vorteil, dass das Fluid in der Leitung unabhängig von der Außentemperatur schnell auf die erforderliche Betriebstemperatur gebracht und gehalten werden kann. Insbesondere bei SCR-Systemen ist damit im Falle eines eingefrorenen Fluids der Betriebszustand besonders schnell erreichbar.

Das Fluid wird durch das Verdrängungselement aus der besonders schlecht beheizbaren Kernstömungszone an den äußeren Rand des Strömungsquerschnitts verdrängt. Dadurch ist ein besserer Kontakt des Fluids mit der beheizten Wandung der Schlauchleitung gegeben. Die spezifische Kontaktfläche, also das Verhältnis aus Kontaktfläche zu Fluidvolumen pro Längeneinheit, steigt vorteilhaft an. Durch den reduzierten Strömungsquerschnitt weist die Strömungszone nur noch eine geringe Dicke auf, was der Erwärmbarkeit des Fluids zugute kommt.

In einer Weiterbildung der Erfindung weist die Außenkontur des Verdrängungselementes in Längsrichtung sich erstreckende nutenförmige radiale Vertiefungsrillen auf, die durch Stege voneinander getrennt sind, wobei die Stege das Verdrängungselement gegen die Wandung der Schlauchleitung abstützen.

Eine derartige erfindungsgemäße Schlauchleitung ermöglicht durch den guten Kontakt des Fluids mit der beheizten Wandung der Schlauchleitung und der geringen Dicke der Strömungszonen eine schnelle und energiesparende Erwärmung des Fluids. Anzahl und Querschnitt der Vertiefungsrillen lassen sich den individuellen Anforderungen nach Durchflussmenge, Heizleistung und Länge der Schlauchleitung einfach anpassen.

In einer weiteren Ausführungsform der Erfindung ist das Verdrängungselement kompressibel.

Die Kompressibilität des Verdrängungskörpers hat den Vorteil, dass im Falle des Einfrierens des Fluids das hinzukommende Volumen des Fluids das Verdrängungselement komprimiert. Dadurch wird das für das einfrierende Fluid zur Verfügung stehende Volumen größer und die Volumenzunahme des Fluids führt zu einer geringeren Druckzunahme in der Leitung

In einer weiteren Ausführungsform der Erfindung ist das Verdrängungselement als ein verformbares Versteifungsprofil ausgebildet.

Diese Ausführungsform hat den Vorteil, dass die derart ausgestattete Schlauchleitung als vorgeformte, an beispielsweise eine Bodenkontur eines Kraftfahrzeugs angepasste Leitung ausgebildet sein kann, die sich auch an schwer zugänglichen Stellen leicht montieren lässt. Dabei kann das Verdrängungselement sowohl vor dem Einschieben in die Leitung vorgeformt sein als auch erst nach dem Einschieben zusammen mit der umgebenden schlauchförmigen Hülle formbar sein.

In einer weiteren Ausführungsform der Erfindung weist die Schlauchleitung an mindestens einem Ende einen Anschlussnippel auf, der an seinem der Schlauchleitung zugewandten ersten Ende mindestens einen in Längsrichtung auf die Schlauchleitung weisenden und über das Endes des Anschlussnippels hinausragenden Abstandsansatz aufweist, der so angeordnet ist, dass bei Verbindung von Schlauchleitung und Anschlussnippel der Abstandsansatz gegen das Verdrängungselement der Schlauchleitung stößt und dieses von der Öffnung des Anschlussnippels derart beabstandet, dass das Fluid aus der Öffnung des Anschlussnippels ungehindert in durch das Verdrängungselement und die Wandung der Schlauchleitung gebildete Strömungszonen fließt.

Durch den Abstandsansatz ist gewährleistet, dass auch bei flachen, am äußeren Rand des Strömungsquerschnittes der Schlauchleitung liegenden Strömungszonen diese nicht durch die Stirnfläche des Anschlussnippels abgedeckt werden.

In einer weiteren Ausführungsform der Erfindung weist das Verdrängungselement an mindestens einem Ende einen dem Anschlussnippel zugewandten Abstandsanschlag auf, der so angeordnet ist, dass bei Verbindung von Schlauchleitung und Anschlussnippel der Abstandsansatz gegen den Anschlussnippel stößt und dadurch das Ende des Verdrängungselementes von der Öffnung des Anschlussnippels derart beabstandet, dass das Fluid aus der Öffnung des Anschlussnippels ungehindert in durch das Verdrängungselement und die Schlauchleitung gebildete Strömungszonen fließt.

Die Anordnung des Abstandsansatzes am Verdrängungselement hat den Vorteil, dass eine derartige Schlauchleitung auch mit herkömmlichen Anschlussnippeln einsetzbar ist.

Anhand der Zeichnung wird nachstehend ein Beispiel der Erfindung näher erläutert.

Es zeigen:
- Fig. 1:: eine perspektivische Darstellung eines Abschnittes einer beheizbaren Schlauchleitung mit Verdrängungskörper,
- Fig. 2:: eine Querschnittsdarstellung der beheizbaren Schlauchleitung mit Verdrängungskörper,
- Fig. 3:: ein Schaubild des Druckaufbaus beim Einfrieren eines Harnstoff-Wasser-Gemisches der erfindungsgemäßen Schlauchleitung im Vergleich zu einer herkömmlichen Schlauchleitung und
- Fig. 4: einen Anschlussnippel mit Abstandsansätzen in unmontiertem Zustand.

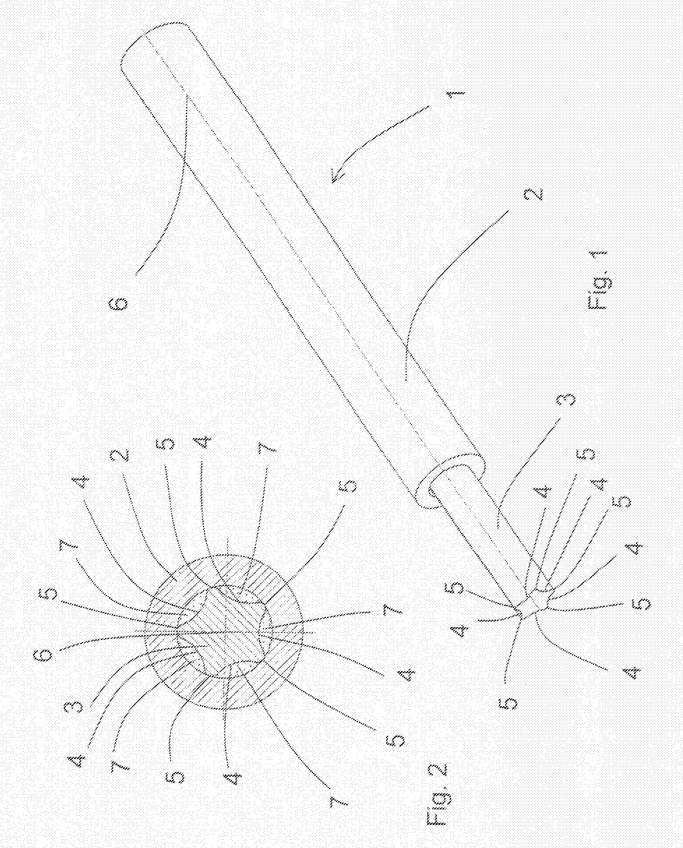

Der in Fig. 1 dargestellte Abschnitt einer beheizbaren Schlauchleitung 1 weist eine Wandung 2 auf, die, beispielsweise elektrisch oder mit anderen Heizmedien aufheizbar ist. Im Inneren der Schlauchleitung 1 ist ein Verdrängungskörper 3 angeordnet, der Vertiefungsrillen 4 und Stege 5 aufweist, wobei sich der Verdrängungskörper 3, die Vertiefungsrillen 4 und die Stege 5 entlang der Längsachse 6 der Schlauchleitung 1 über die gesamte Länge der Schlauchleitung 1 erstrecken.

Die Anordnung des Verdrängungskörpers 3 in der Schlauchleitung 1 ist in Fig. 2 im Querschnitt detailliert dargestellt. Fünf Stege 5 sind gleichmäßig über den Umfang des Verdrängungskörpers 3 verteilt, stehen im Kontakt mit der Wandung 2 der Schlauchleitung 1 und stützen den Verdrängungskörper 3 gegen die Wandung 2 der Schlauchleitung 1 ab.

Das Fluid 7 strömt zwischen der Wandung 2 der Schlauchleitung 1, den Stegen 5 und den Vertiefungsrillen 4 längs der Längsachse 6 der Schlauchleitung 1 dicht an der Wandung 2 entlang. Deshalb ist ein guter Kontakt des Fluids 7 mit der Wandung 2 gegeben. Bei beheizter Wandung 2 ist deshalb ein besonders guter Wärmeübergang von der Wandung 2 in das Fluid 7 gegeben.

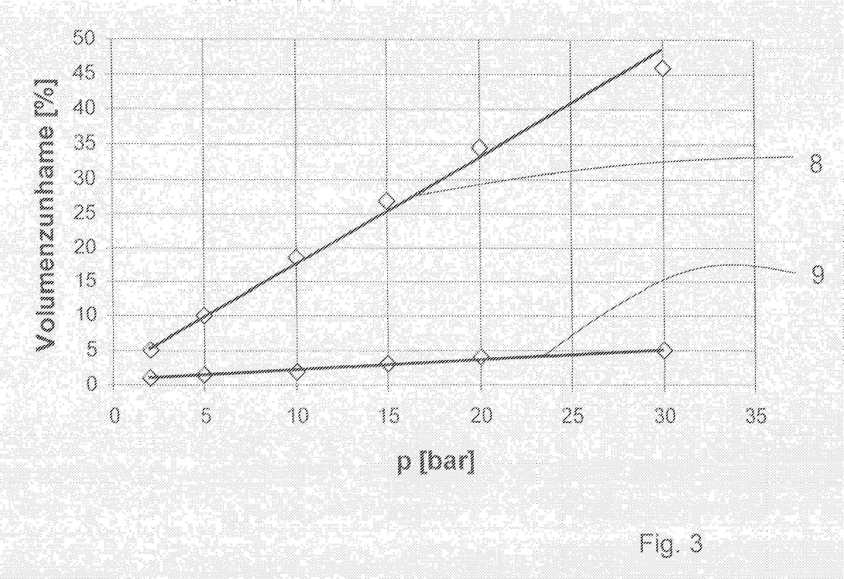

In Fig. 3 ist die Druckzunahme in Abhängigkeit von der Volumenzunahme eines erfindungsgemäßen elektrisch beheizten Elastomerschlauches für SCR-Systeme im Vergleich zu einem aramidverstärkten herkömmlichen Schlauch aufgezeigt. Kurve 8 zeigt die Abhängigkeit zwischen Volumenzunahme und Druckaufbau in einer erfindungsgemäßen Fluidleitung. Erkennbar ist, dass bei einer für Wasser-Harnstoff-Gemische typischen Volumenzunahme von ca. 8,5 % der Druck in der Schlauchleitung auf ca. 4 bar ansteigt. In Kurve 9 ist dagegen erkennbar, dass der Druck in einem herkömmlichen aramidverstärkten Schlauch bereits bei einer Volumenvergrößerung von 5 % der Druck auf 30 bar ansteigt. Ein derartig hoher Systemdruck würde weitere Systemkomponenten wie beispielsweise Ventile zerstören.

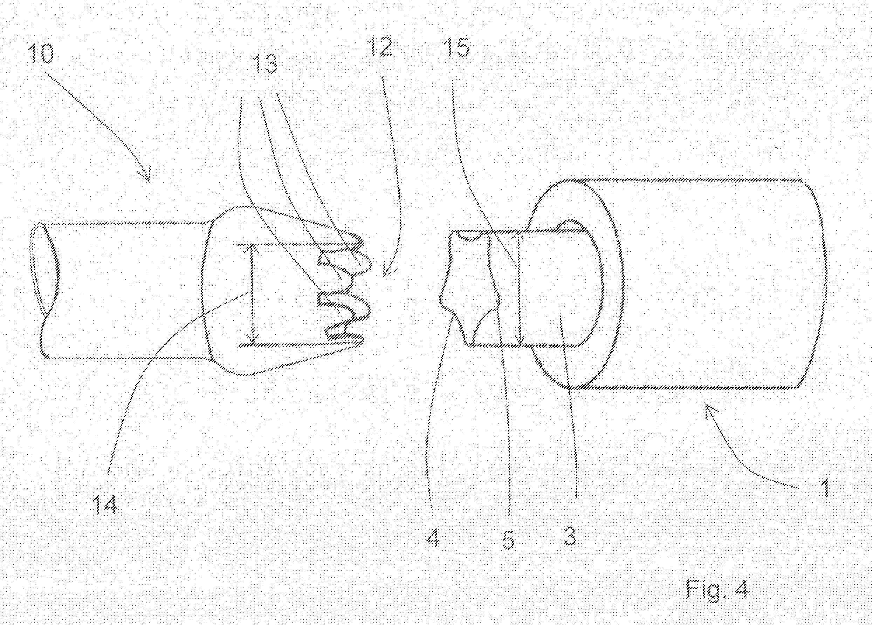

In Fig. 4 ist ein schlauchseitiger Abschnitt eines Anschlussnippels 10 für eine Schlauchleitung 1 in noch nicht montiertem Zustand perspektivisch dargestellt. An der der Schlauchleitung 1 zugewandten Öffnung 12 des Anschlussnippels 10 sind auf dem Umfang verteilt Abstandsansätze 13 angeordnet. Am äußersten Ende ist der Durchmesser 14 des Abstandsansätzekreises 13 kleiner als der Durchmesser 15 des Verdrängungskörpers 3. Wird die Schlauchleitung 1 aus den Anschlussnippel 10 aufgeschoben, stoßen die Abstandsanschläge 13 gegen den Verdrängungskörper 3 und stauchen dieses in die Schlauchleitung zurück. Das Fluid kann damit zwischen den Abstandsansätzen 13 hindurch in die durch die Vertiefungsrillen 4 gebildeten Strömungskanäle der Schlauchleitung 1 fließen.

### Bezugszeichenliste

### (Teil der Beschreibung)

- 1: beheizbare Schlauchleitung
- 2: Wandung der Schlauchleitung 1
- 3: Verdrängungskörper
- 4: Vertiefungsrillen
- 5: Stege
- 6: Längsachse der Schlauchleitung 1/des Verdrängungskörpers 3
- 7: Fluid
- 8: Volumezunahme-Druckzunahme-Abhängigkeitskurve der erfindungsgemäßen Schlauchleitung 1
- 9: Volumezunahme-Druckzunahme-Abhängigkeitskurve einer herkömmlichen Schlauchleitung
- 10: Anschlussnippel
- 12: Schlauchseitige Öffnung des Anschlussnippels 10
- 13: Abstandsansätze
- 14: Durchmesser des Abstandsansätzekreises
- 15: Durchmesser des Verdrängungskörpers 3

## Patentansprüche

1. Schlauchleitung (1) aus elastomerem Material,
**dadurch gekennzeichnet,**
**dass** die Schlauchleitung (1) ein sich mindestens teilweise über die Länge der aufheizbaren Schlauchleitung (1) erstreckendes Verdrängungselement (3) aufweist, das im Inneren der Schlauchleitung (1) angeordnet ist und dessen Außendurchmesser mindestens teilweise kleiner ist als der Innendurchmesser der Schlauchleitung (1).

2. Schlauchleitung (1) nach Anspruch 1, **dadurch gekennzeichnet, dass** die Schlauchleitung (1) als beheizbare Leitung ausgeführt ist.

3. Schlauchleitung (1) nach Anspruch 1 und/oder 2, **dadurch gekennzeichnet, dass** die Außenkontur des Verdrängungselementes (3) in Längsrichtung sich erstreckende nutenförmige radiale Vertiefungsrillen (4) aufweist, die durch Stege (5) voneinander getrennt sind, wobei die Stege (5) das Verdrängungselement (3) gegen die Wandung (2) der Schlauchleitung (1) abstützen.

4. Schlauchleitung (1) nach einem der vorstehenden Ansprüche, **dadurch gekennzeichnet, dass** das Verdrängungselement (3) kompressibel ist.

5. Schlauchleitung (1) nach einem der vorstehenden Ansprüche, **dadurch gekennzeichnet, dass** das Verdrängungselement (3) als ein verformbares Versteifungsprofil ausgebildet ist.

6. Schlauchleitung (1) nach einem der vorstehenden Ansprüche, **dadurch gekennzeichnet, dass** die Schlauchleitung (1) an mindestens einem Ende einen Anschlussnippel (10) aufweist, der an seinem der Schlauchleitung (1) zugewandten ersten Ende (12) mindestens einen in Längsrichtung auf die Schlauchleitung (1) weisenden Abstandsansatz (13) aufweist, der so angeordnet ist, dass bei Verbindung von Schlauchleitung (1) und Anschlussnippel (10) der Abstandsansatz (13) gegen das Verdrängungselement (3) der Schlauchleitung (1) stößt und dieses von der Öffnung des Anschlussnippels (10) derart beabstandet, dass das Fluid aus der Öffnung des Anschlussnippels (10) ungehindert in durch das Verdrängungselement (3) und die Schlauchleitung (1) gebildete Strömungszonen (4) fließt.

7. Schlauchleitung (1) nach Anspruch 1 - 5, **dadurch gekennzeichnet, dass** das Verdrängungselement (3) an mindestens einem Ende einen dem Anschlussnippel (10) zugewandten Abstandsanschlag auf, der so angeordnet ist, dass bei Verbindung von Schlauchleitung (1) und Anschlussnippel (10) der Abstandsansatz gegen den Anschlussnippel (10) stößt und **dadurch** das Ende des Verdrängungselementes (3) von der Öffnung des Anschlussnippels (10) derart beabstandet, dass das Fluid aus der Öffnung des Anschlussnippels (10) ungehindert in durch das Verdrängungselement (3) und die Schlauchleitung (1) gebildete Strömungszonen (4) fließt.
